# EUROPÄISCHE PATENTSCHRIFT

(11) **EP 3 729 044 B1**
(45) Veröffentlichungstag und Bekanntmachung des Hinweises auf die Patenterteilung: **18.05.2022**
(21) Anmeldenummer: 18829189.2
(22) Anmeldetag: 20.12.2018
(51) Int. Cl.: G01M 17/007, B60W 30/00, G01S 15/93, G01S 7/52, B60W 50/02

(54) **VERFAHREN ZUR ANALYSE EINES AUTOMATISIERUNGSSYSTEMS EINER ANLAGE, EMULATOR ZUM ZUMINDEST TEILWEISE VIRTUELLEN BETREIBEN EINES AUTOMATISIERUNGSSYSTEMS EINER ANLAGE UND SYSTEM ZUR ANALYSE EINES AUTOMATISIERUNGSSYSTEMS EINER ANLAGE**
METHOD FOR ANALYSING AN AUTOMATION SYSTEM OF AN INSTALLATION, EMULATOR FOR AT LEAST PARTIAL VIRTUAL OPERATION OF AN AUTOMATION SYSTEM OF AN INSTALLATION, AND SYSTEM FOR ANALYSING AN AUTOMATION SYSTEM OF AN INSTALLATION
PROCÉDÉ POUR L'ANALYSE D'UN SYSTÈME D'AUTOMATISATION D'UNE INSTALLATION, ÉMULATEUR POUR LE FONCTIONNEMENT AU MOINS PARTIELLEMENT VIRTUEL D'UN SYSTÈME D'AUTOMATISATION D'UNE INSTALLATION ET SYSTÈME POUR L'ANALYSE D'UN SYSTÈME D'AUTOMATISATION D'UNE INSTALLATION

(30) Priorität: 21.12.2017 AT 510592017
(43) Veröffentlichungstag der Anmeldung: 28.10.2020
(73) Patentinhaber: AVL List GmbH, 8020 Graz (AT)
(72) Erfinder: LUTZ, Sebastian, 67346 Speyer (DE); HETTEL, Rolf, 76137 Karlsruhe (DE); ALBERS, Albert, 76547 Sinzheim (DE); BEHRENDT, Matthias, 76646 Bruchsal (DE); SCHYR, Christian, 69120 Heidelbergd (DE)
(74) Vertreter: Hahner, Ralph
(86) Internationale Anmeldenummer: PCT/AT2018/060313
(87) Internationale Veröffentlichungsnummer: WO 2019/119012

(56) Entgegenhaltungen:
- DE-A1-102007 031 040
- DE-A1-102009 008 680
- DE-A1-102014 118 320
- DE-A1-102014 118 624
- DE-A1-102014 118 625
- DE-B4-102007 031 040

## Beschreibung

Die vorliegende Erfindung betrifft ein Verfahren zur Analyse eines Automatisierungssystems, insbesondere eines Fahrerassistenzsystems in einem Fahrzeug, einen Emulator zum wenigstens teilweise virtuellen Betreiben eines Automatisierungssystems einer Anlage und ein System zur Analyse eines Automatisierungssystems einer Anlage. Moderne Fahrerassistenzsysteme (Advanced Driver Assistance Systems, ADAS) sind aufgrund des durch sie gebotenen Komforts und der durch sie erhöhten Fahrzeugsicherheit mittlerweile weit verbreitet. Die Entwicklung solcher Systeme basiert zunehmend auf dem sog. "from road to rig"-Ansatz, in dessen Rahmen Tests der Fahrerassistenzsysteme nicht in einer realen Umgebung, sondern in einer simulierten Umgebung durchgeführt werden.

Der "from road to rig"-Ansatz wird beispielsweise in sog. "vehicle-in-the-loop"-Anwendungen umgesetzt, in denen ein Fahrzeug wie in einer realen Umgebung betrieben werden kann, die Wechselwirkung des Fahrzeugs mit seiner Umgebung jedoch künstlich und damit in einer kontrollierten Weise erzeugt wird. So sind beispielsweise Teststände bekannt, in denen physikalische Objekte vor Sensoren des Fahrzeugs, die zur Messung von Abständen eingerichtet sind, bewegt werden, um verschiedene Abstände der Objekte zum Fahrzeug zu simulieren. Es ist damit möglich, die Reaktionen eines Fahrerassistenzsystems auf die verschiedenen Abstände zu testen. Verschiedene Mittel oder Methoden zum Testen von automatischen Fahrzeug-Fahrerassistenzsystemen sind z.B. in DE201410118625, DE201410118624 oder DE102009008680 offenbart.

Es ist eine Aufgabe der Erfindung, die Anbindung eines Automatisierungssystems einer Anlage an eine simulierte Testumgebung zu vereinfachen.

Diese Aufgabe wird gelöst durch ein Verfahren zur Analyse eines Automatisierungssystems gemäß dem unabhängigen Anspruch.

Ein erster Aspekt der Erfindung betrifft Verfahren zur Analyse eines Automatisierungssystems einer Anlage, insbesondere eines Fahrerassistenzsystems eines Fahrzeugs, welches Umgebungssensoren aufweist. Das Verfahren weist folgende Arbeitsschritte auf: (i) Simulieren eines Umgebungsszenarios für die Anlage, insbesondere eines Verkehrsszenarios; (ii) Ableiten eines durch wenigstens einen Umgebungssensor zu erfassenden Antwort-Signals, insbesondere eines Ultraschall-Antwortsignals, auf der Grundlage des Umgebungsszenarios aus der Perspektive des wenigstens einen Umgebungssensors; (iii) Ausgeben des Antwort-Signals an den wenigstens einen Umgebungssensor mittels eines Emulators, wobei der wenigstens eine Umgebungssensor auf der Grundlage des ausgegebenen Antwort-Signals Sensordaten erzeugt; und (iv) Betreiben des Automatisierungssystems und/oder der Anlage mittels der erzeugten Sensordaten und vorzugsweise weiterer Sensordaten realer und/oder simulierter Sensoren (v) Simulieren des wenigstens einen Umgebungssensors mittels eines Sensormodells, wobei der wenigstens eine simulierte Umgebungssensor das simulierte Umgebungsszenario virtuell erfasst und das Antwort-Signal auf der Grundlage des virtuell erfassten simulierten Umgebungsszenarios erzeugt wird.

Ein Emulator im Sinne der Erfindung ist insbesondere eine Vorrichtung, die eingerichtet ist, Informationen bezüglich eines simulierten Umgebungsszenarios, insbesondere auf Grundlage von Soll-Signalen und Steuerparametern, die das simulierte Umgebungsszenario charakterisieren, an wenigstens einen Umgebungssensor, etwa einen Ultraschallsensor, auszugeben. Der Emulator sendet dabei vorzugsweise ein Antwort-Signal, etwa ein Ultraschall-Antwortsignal, aus, das diese Informationen enthält und von dem wenigstens einen Umgebungssensor empfangen und in entsprechende Sensordaten umgewandelt werden kann. Zusätzlich kann der Emulator auch dazu eingerichtet sein, ein von dem wenigstens einen Umgebungssensor ausgesendetes Signal zu empfangen und das Antwort-Signal in Abhängigkeit des empfangenen Signals, insbesondere in Abhängigkeit des Zeitpunkts, zu dem das Signal empfangen wird, auszusenden.

Ein simuliertes Umgebungsszenario im Sinne der Erfindung ist insbesondere ein Modell der Umwelt der Anlage, insbesondere des Fahrzeugs, welches den Betrieb des Automatisierungssystems der Anlage, insbesondere des Fahrerassistenzsystems, betreffende Informationen liefert. Diese Informationen können dabei für den Betrieb des Automatisierungssystems essenziell sein. Ein simuliertes Umgebungsszenario kann beispielsweise eine Verkehrssituation sein, in der sich simulierte Fahrzeuge auf simulierten Straßen bewegen oder eine Parklücke zwischen zwei stehenden Fahrzeugen am Straßenrand gebildet wird. Ein solches simuliertes Umgebungsszenario liefert vorzugsweise Informationen zu Abständen zwischen den (virtuellen) Objekten des simulierten Umgebungsszenarios und/oder, wenigstens einem, gegebenenfalls simulierten, Umgebungssensor der Anlage. Alternativ oder zusätzlich kann ein simuliertes Umgebungsszenario auch eine Wettersituation berücksichtigen, in der eine (simulierte) Erfassung der Umwelt der Anlage, insbesondere des Fahrzeugs, von simulierten meteorologischen Bedingungen wie Luftfeuchtigkeit, Luftdruck und/oder dergleichen und/oder durch eine simulierte Wetterlage wie Regen, Schneefall, Nebel und/oder dergleichen beeinflusst, insbesondere beeinträchtigt, wird.

Ein Umgebungssensor im Sinne der Erfindung ist insbesondere eine Vorrichtung zum Erfassen und/oder Messen von physikalischen Größen aus der Umgebung bzw. dem Umfeld der Anlage, insbesondere des Fahrzeugs. Vorzugsweise ist der Umgebungssensor dabei dazu eingerichtet, die Umgebung bzw. das Umfeld der Anlage zu sondieren, insbesondere abzutasten. Ein Umgebungssensor kann beispielsweise als Ultraschallsensor, Radarsensor und/oder Lidarsensor ausgebildet und dazu eingerichtet sein, Schallwellen bzw. elektromagnetische Wellen auszusenden und von der Umgebung bzw. dem Umfeld der Anlage beeinflusste, insbesondere an Objekten reflektierte, Schallwellen bzw. elektromagnetische Wellen zu empfangen. Zudem ist der Umgebungssensor vorzugsweise dazu eingerichtet, anhand eines empfangenen Antwort-Signals Sensordaten zu erzeugen, die das Antwort-Signal und/oder die in ihm enthaltene Information charakterisieren.

Die Erfindung basiert insbesondere auf dem Ansatz, ein Automatisierungssystem einer Anlage, etwa ein Fahrerassistenzsystem eines Fahrzeugs, zumindest teilweise auf der Grundlage von Sensordaten zu betreiben, die ein simuliertes Umgebungsszenario, insbesondere eine simulierte Verkehrssituation, charakterisieren. Vorzugsweise werden dazu an wenigstens einem Umgebungssensor von einem Emulator Antwort-Signale bereitgestellt, die das simulierte Umgebungsszenario betreffende Informationen enthalten. Durch den wenigstens einen Umgebungssensor können die von ihm empfangenen Antwort-Signale in die entsprechenden Sensordaten umgewandelt werden. Die Antwort-Signale werden dabei in bevorzugter Weise aus dem simulierten Umgebungsszenario aus der Perspektive des wenigstens einen Umgebungssensors abgeleitet, etwa indem ein bereitgestelltes Signal entsprechend der das simulierte Umgebungsszenario betreffende Informationen moduliert und/oder zu einem vorgegebenen Zeitpunkt, insbesondere mit einer Zeitverzögerung, von dem Emulator an den wenigstens einen Umgebungssensor gesendet wird.

Auf Grundlage der simulierten Verkehrssituation, etwa einer durch Objekte wie Fahrzeuge, Straßenschilder, Gebäude und/oder Bordstein begrenzten Parklücke, können beispielsweise Ultraschall-Antwortsignale erzeugt und von dem Emulator an wenigstens einen Ultraschallsensor ausgegeben werden. Die Ultraschall-Antwortsignale charakterisieren dabei vorzugsweise zumindest den oder die Abstände des Fahrzeugs, insbesondere des wenigstens einen Ultraschallsensors, zu den die Parklücke begrenzenden Objekten. Anhand der daraufhin vom wenigstens einen Ultraschallsensor erzeugten Sensordaten kann das Fahrerassistenzsystem des Fahrzeugs, etwa ein Einparkassistent, Hinweise bezüglich des Einparkvorgangs an einen Fahrer des Fahrzeugs ausgeben und/oder autonom oder zumindest teilautonom einparken.

Dies ist besonders vorteilhaft, da somit der wenigstens eine Umgebungssensor variabel angesprochen werden kann, ohne dass dazu reale Umgebungsbedingungen geändert werden müssen. Insbesondere kann dem Automatisierungssystem anhand des Antwort-Signals ein im Wesentlichen beliebiges Umgebungsszenario, insbesondere aus der Perspektive des wenigstens einen Umgebungssensors, dargestellt werden. Beispielsweise kann dadurch ein Objekt aus dem Umgebungsszenario vor einem Ultraschallsensor simuliert werden, dessen Abstand zum Ultraschallsensor über ein vom Emulator zeitverzögert ausgegebenes Antwort-Signal eingestellt werden kann. Damit lassen sich für ein Fahrerassistenzsystem, welches vom Ultraschallsensor erzeugte Sensordaten verarbeitet, im Wesentlichen beliebige Verkehrssituationen darstellen und dessen Reaktion auf diese Verkehrssituationen testen. Es spielt dabei keine Rolle, in welchem Kontext das Fahrerassistenzsystem getestet wird, das heißt das Fahrerassistenzsystem kann sowohl im realen Umfeld, etwa auf einer Straße bzw. Teststrecke, als auch auf einem Prüfstand, beispielsweise einem Rollen- bzw. Antriebsstrangprüfstand, getestet werden.

Insgesamt ermöglicht die Erfindung eine vereinfachte Anbindung eines Automatisierungssystems einer Anlage an eine simulierte Testumgebung.

In einer bevorzugten Ausführungsform wird der wenigstens eine Umgebungssensor mittels eines Sensormodells simuliert. Dabei wird das simulierte Umgebungsszenario von dem wenigstens einen simulierten Umgebungssensor virtuell erfasst und das Antwort-Signal vorzugsweise auf der Grundlage des virtuell erfassten simulierten Umgebungsszenarios erzeugt. Insbesondere wird der wenigstens eine Umgebungssensor durch das Sensormodell dabei in der Weise simuliert, dass physikalische Größen aus dem Umfeld der Anlage, beispielsweise Abstände zu Objekten, die das Fahrzeug umgeben, in dem simulierten Umgebungsszenario erfasst, insbesondere gemessen, werden können. Dadurch wird das simulierte Umgebungsszenario von dem Antwort-Signal besonders zuverlässig und detailliert gekennzeichnet. Zudem wird dadurch die Berücksichtigung der Perspektive des wenigstens einen Umgebungssensors bezüglich des simulierten Umgebungsszenarios beim Ableiten des Antwort-Signals vereinfacht.

In einer weiteren bevorzugten Ausführungsform werden ein Signal, insbesondere dessen Ausbreitung und Intensität, zum virtuellen Erfassen des simulierten Umgebungsszenarios sowie das Antwort-Signal auf der Grundlage von physikalischen Modellen durch das Sensormodell simuliert. Vorzugsweise ist das Sensormodell geeignet, den wenigstens einen Umgebungssensor innerhalb des simulierten Umgebungsszenarios abzubilden, das heißt dem wenigstens einen Umgebungssensor oder zumindest dessen Funktion, insbesondere das Aussenden des Signals, innerhalb des simulierten Umgebungsszenarios zu simulieren. Anhand der physikalischen Modelle können insbesondere Reflexion, Streuung und Absorption des von dem wenigstens einen simulierten Umgebungssensor ausgesendeten Signals, etwa eines Ultraschallsignals, simuliert und dadurch eine besonders genaue und wirklichkeitsgetreue Erfassung des simulierten Umgebungsszenarios ermöglicht werden.

In einer weiteren bevorzugten Ausführungsform werden das Automatisierungssystem und/oder die Anlage auf einem Prüfstand oder im Feld mittels des simulierten Umgebungsszenarios betrieben. Vorzugsweise ist der Prüfstand dazu eingerichtet, neben dem wenigstens einen Umgebungssensor weitere Sensoren zu stimulieren, so dass zum Betrieb des Automatisierungssystems der Anlage umfassende Informationen bezüglich des simulierten Umgebungsszenarios, die durch den Prüfstand vermittelt werden, bereitstehen. Beispielsweise kann der Prüfstand als Rollen- bzw. Antriebsstrangprüfstand ausgebildet sein, mit dem verschiedene Fahrbahnverhältnisse bzw. die Traktion eines Fahrzeugs auf der Straße emuliert werden können. Alternativ oder zusätzlich kann der Prüfstand neben einem Emulator zum Simulieren von Ultraschall im simulierten Umgebungsszenario einen Radar- und/oder Lidarzielemulator, einen Bildstromemulator, einen Geräuschemulator und/oder einen Witterungsemulator aufweisen. Durch den Betrieb des Fahrzeugs auf einem solchen Prüfstand oder im Feld, wobei das Fahrerassistenzsystem mittels des simulierten Umgebungsszenarios betrieben wird, kann einerseits das Fahrerassistenzsystem umfassend analysiert werden und andererseits auch das Zusammenspiel mit weiteren Systemen oder Komponenten des Fahrzeugs, etwa mit anderen Fahrerassistenzsystemen, dem Fahrwerk und/oder der Motorsteuerung, analysiert und getestet werden. Die Integration des simulierten Umgebungsszenarios in den Prüfstand oder das Feld bietet dabei die Möglichkeit, die Analyse effizient und gefahrlos, insbesondere ohne mögliche Beschädigung der Anlage, auszuführen.

In einer weiteren bevorzugten Ausführungsform berücksichtigt der Emulator beim Ausgeben des Antwort-Signals ein empfangenes Signal, welches von dem wenigstens einen Umgebungssensor ausgesandt wurde. Insbesondere berücksichtigt der Emulator dabei den Zeitpunkt, zu dem das Signal empfangen wurde, und gibt das Antwort-Signal zeitverzögert aus. Dadurch kann der Emulator Abstände zwischen einem Objekt des modulierten Umgebungsszenarios und dem wenigstens einen Umgebungssensor zuverlässig und präzise abbilden.

Vorzugsweise wird das empfangene Signal zur Erzeugung des Antwort-Signals auf Grundlage des simulierten Umgebungsszenarios moduliert, so dass ein oder mehrere Objekte des simulierten Umgebungsszenarios von dem Antwort-Signal abgebildet werden bzw. das Antwort-Signal durch die Objekte des simulierten Umgebungsszenarios gekennzeichnet ist. Dadurch können im Antwort-Signal besonders detaillierte Informationen bezüglich des simulierten Umgebungsszenarios enthalten sein, wodurch eine besonders zuverlässige und umfassende Analyse des Automatisierungssystems der Anlage ermöglicht wird.

Ein zweiter Aspekt der Erfindung betrifft einen Emulator zum wenigstens teilweise virtuellen Betreiben eines Automatisierungssystems einer Anlage, insbesondere eines Fahrerassistenzsystems eines Fahrzeugs, welches Umgebungssensoren aufweist, zur Verwendung in einem Verfahren zur Analyse eines Automatisierungssystems einer Anlage. Der Emulator weist einen Empfänger, der zum Empfangen von Signalen, welche von einem Umgebungssensor ausgesandt werden, eingerichtet ist, einen Sender, der zum Aussenden von Antwort-Signalen auf empfangene Signale eingerichtet ist, auf. Des Weiteren weist der Emulator einen absorbierenden Bereich, der zum Absorbieren von vom Emulator selbst (ungewollt) reflektierten Signalen eingerichtet ist, eine Signalverarbeitungseinrichtung, welche eingerichtet ist, auf der Grundlage der empfangenen Signale Antwort-Signale zu erzeugen und eine Daten-Schnittstelle zum Empfang von Soll-Signalen und/oder Steuerparametern, insbesondere in Echtzeit, von einer zentralen Steuerung, wobei der Empfänger und der Sender in einer Signal-absorbierenden Kammer angeordnet sind, auf.

Der Emulator ist vorzugsweise dazu eingerichtet, an oder vor einem Umgebungssensor platziert zu werden und den Umgebungssensor gegenüber Signalen, die nicht vom Sender an den Umgebungssensor ausgesendet werden, abzuschirmen. Dadurch sind die vom Umgebungssensor auf Grundlage des empfangenen Antwort-Signals erzeugten Sensordaten im Wesentlichen ausschließlich durch das simulierte Umgebungsszenario charakterisiert, so dass das Automatisierungssystem zuverlässig wenigstens teilweise virtuell betrieben werden kann.

Der Emulator kann etwa, zumindest teilweise, insbesondere im Bereich des Empfängers und/oder des Senders, mit einem Material, das zum Absorbieren der vom Umgebungssensor ausgesendeten Signale geeignet ist, beschichtet sein, so dass vom Umgebungssensor ausgesendeten Signale, die nicht direkt auf den Empfänger treffen, absorbiert werden. Vorzugsweise ist das Material als Schallabsorber, insbesondere als schallabsorbierende Schaumstoffmatte, ausgebildet und dazu geeignet, vom Umgebungssensor ausgesendete Ultraschallsignale zu absorbieren.

In einer bevorzugten Ausführungsform weist der Emulator des Weiteren eine Signalverarbeitungseinrichtung auf, welche eingerichtet ist, auf der Grundlage der empfangenen Signale Antwort-Signale zu erzeugen. Alternativ oder zusätzlich weist der Emulator eine Daten-Schnittstelle zum Empfang von Soll-Signalen und/oder Steuerparametern, insbesondere in Echtzeit, von einer zentralen Steuerung auf. Dadurch kann der Emulator zuverlässig betrieben und gesteuert, insbesondere das Erzeugen der Antwort-Signale, nach Bedarf beeinflusst werden.

Die Signalverarbeitungseinrichtung ist dabei vorzugsweise dazu eingerichtet, die empfangenen Signale auf Grundlage des simulierten Umgebungsszenarios, insbesondere auf Grundlage der empfangenen Soll-Signale und/oder Steuerparametern, zu modulieren und/oder zeitlich zu verzögern bzw. zeitlich verzögert an den Sender auszugeben. Die Signalverarbeitungseinrichtung kann beispielsweise als entsprechend programmierter Mikrocontroller ausgebildet sein. Somit wird eine präzise Abbildung des simulierten Umgebungsszenarios durch die Antwortsignale ermöglicht.

Die Daten-Schnittstelle ist vorzugsweise als D-Sub-Stecker ausgebildet und beispielsweise dazu eingerichtet, die Soll-Signale und/oder Steuerparameter von der zentralen Steuerung über einen Daten-Bus, insbesondere über einen I²C-Bus, zu empfangen. Bei der zentralen Steuerung kann es sich um einen Mikrocontroller handeln, der dazu eingerichtet, insbesondere programmiert, ist, von einem Simulationsmittel zum Simulieren des Umgebungsszenarios, beispielsweise über eine Netzwerkverbindung-Verbindung mittels des UDP-Protokolls, Simulationsdaten bezüglich des simulierten Umgebungsszenarios zu empfangen und auf Grundlage der empfangenen Simulationsdaten die Soll-Signale und/oder Steuerparametern zu erzeugen und an die Daten-Schnittstelle ausgegeben. Dadurch können das simulierte Umgebungsszenario betreffende Informationen zuverlässig und flexibel am Emulator bereitgestellt werden.

In einer weiteren bevorzugten Ausführung sind der Empfänger und der Sender in einer Signal-absorbierenden Kammer angeordnet. Vorzugsweise bildet die Signal-absorbierende Kammer den absorbierenden Bereich des Emulators. Beispielsweise ist die Signal-absorbierende Kammer mit dem Material, welches zum Absorbieren der vom Umgebungssensor ausgesendeten Signale geeignet ist, zumindest teilweise ausgekleidet. Dabei ist der Empfänger und/oder der Sender des Emulators in bevorzugter Weise in einer Aussparung der Signal-absorbierenden Kammer angeordnet, so dass die vom Umgebungssensor ausgesendeten Signale, die neben dem Empfänger auf die Signal-absorbierende Kammer, insbesondere auf das Signal-absorbierenden Material, treffen nicht reflektiert werden und somit die vom Sender ausgesendeten Antwort-Signale nicht stören.

In einer weiteren bevorzugten Ausführungsform weist die Signal-absorbierende Kammer eine Öffnung auf, durch welche die Signale in den Emulator eintreten können und/oder in/vor welcher ein Umgebungssensor angeordnet werden kann. Dabei sind der Empfänger und/oder der Sender des Emulators vorzugsweise auf einer der Öffnung gegenüberliegenden Seite der Signal-absorbierenden Kammer angeordnet. Dadurch kann eine ungewollte Reflexion der vom Umgebungssensor ausgesendeten Signale und/oder eine Störung der vom Sender ausgesendeten Antwort-Signale zuverlässig vermieden, das heißt eine effektive Abschirmung des Umgebungssensor und des Senders und/oder Empfängers gegenüber der Umgebung der Anlage, ermöglicht werden.

Ein dritter Aspekt der Erfindung betrifft ein System zur Analyse eines Automatisierungssystems einer Anlage, insbesondere eines Fahrerassistenzsystems eines Fahrzeugs, welches Umgebungssensoren aufweist. Das System weist ein Simulationsmittel zum Simulieren eines Umgebungsszenarios für die Anlage und wenigstens einen Emulator, insbesondere einen Ultraschallemulator, nach dem zweiten Aspekt der Erfindung, auf. Dabei ist der wenigstens eine Emulator eingerichtet, ein Signal an die Umgebungssensoren auf der Grundlage des Umgebungsszenarios aus der Perspektive der Umgebungssensoren auszugeben.

In einer weiteren Ausführungsform weist das System des Weiteren eine zentrale Steuerung auf. Vorzugsweise sind die zentrale Steuerung und der wenigstens eine Emulator eingerichtet, um miteinander, insbesondere über die Daten-Schnittstelle, zu kommunizieren. Weiter vorzugsweise ist die zentrale Steuerung eingerichtet, ein Ausgeben von Antwort-Signalen an einer Mehrzahl von Emulatoren auf der Grundlage des Umgebungsszenarios zu steuern. Dadurch können mehrere, insbesondere räumlich voneinander getrennte, Umgebungssensoren jeweils von einem Emulator stimuliert werden, das heißt an jedem Umgebungssensor auf die Position des jeweiligen Umgebungssensor in Bezug auf das simulierte Umgebungsszenario angepasste Antwort-Signale bereitgestellt werden, was eine besonders umfassende Analyse des Automatisierungssystems ermöglicht.

Dabei ist die zentrale Steuerung insbesondere dazu eingerichtet, aus den vom Simulationsmittel zum Simulieren des Umgebungsszenarios, beispielsweise über eine NetzwerkVerbindung mittels des UDP-Protokolls, bereitgestellten Simulationsdaten, entsprechende Soll-Signale und/oder Steuerungsparameter zu erzeugen und deren Bereitstellung an der Daten-Schnittstelle des wenigstens einen Emulators zu koordinieren. Die Simulationsdaten können dadurch besonders flexibel zur Analyse des Automatisierungssystems eingesetzt werden.

In einer weiteren bevorzugten Ausführungsform definiert die zentrale Steuerung Frequenz, Amplitude und Antwort-Totzeit für jeden der Mehrzahl an Emulatoren. Dadurch kann das simulierte Umgebungsszenario durch jedes der Antwort-Signale der Mehrzahl von Emulatoren besonders realistisch und detailliert abgebildet werden.

Die in Bezug auf den ersten Aspekt der Erfindung und dessen vorteilhafte Ausgestaltung beschriebenen Merkmale und Vorteile gelten, zumindest wo technisch sinnvoll, auch für den zweiten und dritten Aspekt der Erfindung und dessen vorteilhafte Ausgestaltung sowie umgekehrt.

Weitere Merkmale, Vorteile und Anwendungsmöglichkeiten der Erfindung ergeben sich aus der nachfolgenden Beschreibung im Zusammenhang mit den Figuren, in denen durchgängig dieselben Bezugszeichen für dieselben oder einander entsprechende Elemente der Erfindung verwendet werden. Es zeigen wenigstens teilweise schematisch:
- Fig. 1: ein bevorzugtes Ausführungsbeispiel eines Verfahrens zur Analyse eines Auto-matisierungssystems einer Anlage;
- Fig. 2: einen Prüfstand mit einem Emulator;
- Fig. 3: ein Gehäuse eines Emulators;
- Fig. 4: einen Schnitt durch den Emulator aus Fig. 3 entlang der Schnittlinie IV-IV;
- Fig. 5: einen Schnitt durch den Emulator aus Fig. 3 entlang der Schnittlinie V-V;
- Fig. 6: einen Schnitt durch den Emulator aus Fig. 3 entlang der Schnittlinie VI-VI;
- Fig. 7: einen Schnitt durch den Emulator aus Fig. 3 in der Ebene X-Z in einer dreidimensionalen Darstellung; und
- Fig. 8: ein bevorzugtes Ausführungsbeispiel eines Systems.

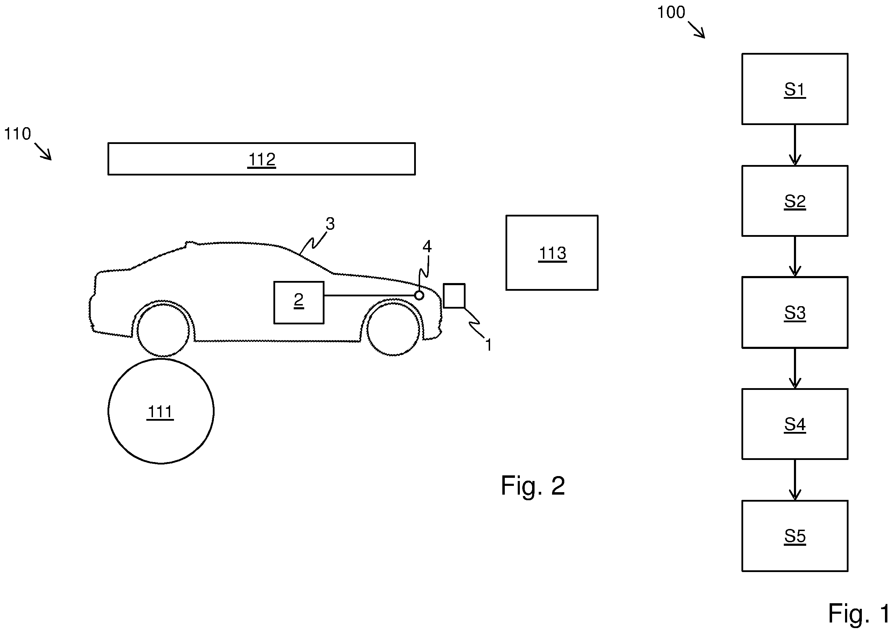

**Figur** 1 zeigt ein bevorzugtes Ausführungsbeispiel eines Verfahrens 100 zur Analyse eines Automatisierungssystems einer Anlage, insbesondere eines Fahrerassistenzsystem eines Fahrzeugs.

In einem Verfahrensschritt S1 wird ein Umgebungsszenario für die Anlage, insbesondere ein Verkehrsszenario, simuliert. Dies wird vorzugsweise mittels einer entsprechenden Software, beispielsweise AVL VSM^{®} oder auch Vires VTD^{®}, durchgeführt. Dabei können Simulationsdaten erzeugt werden, welche das Umgebungsszenario charakterisieren, das heißt beispielsweise Informationen bezüglich der Form verschiedener Objekte des simulierten Umgebungsszenarios, physikalischer Eigenschaften dieser Objekte, Abständen zwischen diesen Objekten, Witterungsbedingungen, Fahrbahnverhältnissen und/oder dergleichen enthalten.

In einem weiteren Verfahrensschritts S2 wird vorzugsweise wenigstens ein Umgebungssensor der Anlage, beispielsweise ein Ultraschallsensor des Fahrzeugs, mittels eines Sensormodells im simulierten Umgebungsszenario simuliert. Das Sensormodell kann physikalische Modelle enthalten, auf deren Grundlage eine Wechselwirkung zwischen dem simulierten Umgebungssensor und Objekten des simulierten Umgebungsszenarios abgeleitet werden kann. Dadurch kann beispielsweise ein Signal, insbesondere dessen Ausbreitung und Intensität, welches vom simulierten Umgebungssensor in das simulierte Umgebungsszenario ausgesendet wird, simuliert werden. Insbesondere wird die Reflexion, Transmission und Absorption des simulierten Signals an Objekten des simulierten Umgebungsszenarios ermittelt werden.

In einem weiteren Verfahrensschritt S3 wird vorzugsweise anhand des simulierten Umgebungsszenarios aus der Perspektive des wenigstens einen Umgebungssensors, insbesondere anhand des simulierten Umgebungssensors im simulierten Umgebungsszenario und/oder der simulierten Wechselwirkung des vom simulierten Umgebungssensor ausgesendeten simulierten Signals zum Erfassen des simulierten Umgebungsszenarios, ein Antwort-Signal erzeugt. Das Antwort-Signal enthält in bevorzugter Weise für den Betrieb des Automatisierungssystems relevante Informationen bezüglich des simulierten Umgebungsszenarios. Das Antwort-Signal kann beispielsweise durch Modulation und/oder zeitliche Verzögerung eines bereitgestellten Signals auf Grundlage der simulierten Wechselwirkung zwischen dem vom simulierten Umgebungssensor ausgesendeten Signal und dem simulierten Umgebungsszenario erzeugt werden.

In einem weiteren Verfahrensschritt S4 wird das Antwort-Signal von einem Emulator an den wenigstens einen Umgebungssensor der Anlage übermittelt, etwa Schallwellen mittels eines Senders des Emulators an den wenigstens einen als Ultraschallsensor ausgebildeten Umgebungssensor ausgegeben. Somit können von dem wenigstens einen Umgebungssensor anhand des Antwort-Signals Sensordaten erzeugt werden, die das simulierte Umgebungsszenario charakterisieren.

In einem weiteren Verfahrensschritt S5 wird das Automatisierungssystem und/oder die Anlage anhand der erzeugten Sensordaten betrieben. Zusätzlich können weitere Sensordaten realer und/oder simulierter Sensoren erzeugt und zum Betrieb des Automatisierungssystems und/oder der Anlage verwendet werden.

**Figur 2** zeigt einen Prüfstand 110 mit einem Emulator 1 zum wenigstens teilweise virtuellen Betreiben eines Automatisierungssystems einer Anlage, insbesondere eines Fahrerassistenzsystems 2 eines Fahrzeugs 3. Beim Prüfstand 110 handelt es sich vorzugsweise um einen Rollenprüfstand mit einer Radstimulationseinrichtung 111 und einen Witterungsemulator, der eine Temperierungseinrichtung 112 und eine Fahrtwindemulationseinrichtung 113 aufweist.

Anhand des Prüfstands 110 kann das Fahrzeug 3 unter genau kontrollierten Bedingungen betrieben werden. Beispielsweise kann auf die drehbar gelagerte Radstimulationseinrichtung 111 ein Moment aufgebracht werden, wodurch unterschiedliche Beladungen des Fahrzeugs 2, unterschiedliche Fahrbahnverhältnisse und/oder dergleichen simulierbar sind. Alternativ oder zusätzlich können verschiedene Witterungsbedingungen simuliert werden, etwa indem die Temperierungseinrichtung 112 verschiedene Temperaturen und/oder die Fahrtwindemulationseinrichtung 113 verschiedene Windströmungen bereitstellt.

Weitere, insbesondere komplexere, Wechselwirkungen des Fahrzeugs 3 mit seiner Umgebung und/oder Einflüsse der Umgebung auf das Fahrzeug 3 können durch den Emulator 1, der vorzugsweise als Ultraschallemulator ausgebildet ist, simuliert werden.

Um die Umgebung zu erfassen, weist das Fahrzeug 3 wenigstens einen Umgebungssensor 4 auf, der dazu eingerichtet ist, ein Signal zur Erfassung der Umgebung des Fahrzeugs 3 auszusenden. Das Signal, beispielsweise ein Ultraschallsignal, wechselwirkt mit der Umgebung und wird dabei von der Umgebung beeinflusst. Das beeinflusste Signal kann von dem wenigstens einen Umgebungssensor 4 empfangen werden und auf dessen Grundlage Sensordaten erzeugt werden, welche die Umgebung des Fahrzeugs 3 charakterisieren. Die Wechselwirkung entspricht dabei beispielsweise einer Reflexion, einer Transmission und/oder einer zumindest teilweisen Absorption des Signals an bzw. von Objekten aus der Umgebung des Fahrzeugs 3.

Um das Fahrerassistenzsystem 2 in einer genau kontrollierten Umgebung analysieren zu können, ist der Emulator 1 vorzugsweise dazu eingerichtet, den wenigstens einen Umgebungssensor 4 des Fahrzeugs3 gemäß eines simulierten Umgebungsszenarios, beispielsweise einer Verkehrssituation, zu stimulieren. Zu diesem Zweck sendet der Emulator 1 in bevorzugter Weise ein Antwort-Signal aus, das aus dem simulierten Umgebungsszenario aus der Perspektive des wenigstens einen Umgebungssensors 4 abgeleitet wird und vorteilhaft auf dem zuvor von dem wenigstens einen Umgebungssensor 4 ausgesandten und von dem Emulator 1 empfangenen Signal basiert. Das vom wenigstens einen Umgebungssensor 4 empfangene Antwort-Signal entspricht dadurch einem durch die Wechselwirkung mit der Umgebung beeinflussten Signal.

Das Antwort-Signal enthält somit Informationen bezüglich des simulierten Umgebungsszenarios, beispielsweise bezüglich physikalischer Eigenschaften von Objekten des simulierten Umgebungsszenarios. Insbesondere kann auf Abstände des wenigstens einen Umgebungssensors 4 zu Objekten des simulierten Umgebungsszenarios anhand einer Zeitverzögerung zwischen dem Aussenden des Signals und dem Empfangen des Antwort-Signals durch den wenigstens einen Umgebungssensor 4 geschlossen werden. Um durch das simulierte Umgebungsszenario vorgegebene Abstände zu emulieren, kann der Emulator 1 dazu eingerichtet sein, dass Antwort-Signal entsprechend zeitverzögert in Bezug auf das vorherige Empfangen des Signals auszusenden.

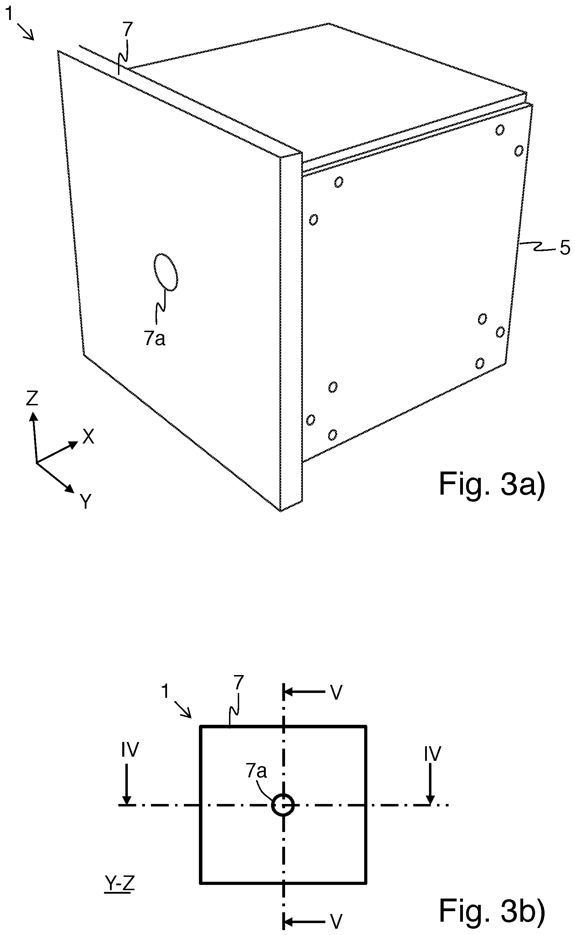

**Figur 3** zeigt ein Gehäuse 5 eines Emulators 1. Aufgrund seiner im Wesentlichen rechteckigen, insbesondere würfelartigen, Form kann das Gehäuse 5 leicht im Bereich einer Anlage angeordnet, insbesondere in einen Prüfstand integriert (siehe Figur 2) werden.

Das Gehäuse 5 ist im gezeigten Ausführungsbeispiel auf einer Außenseite, die einem Umgebungssensor der Anlage, beispielsweise einem Ultraschallsensor eines Fahrzeugs, zugewandt ist, mit einer Signal-absorbierenden Blende 7 bedeckt, wie in der dreidimensionalen Darstellung des Emulators 1 in Figur 3a) gut zu erkennen ist. Die Signal-absorbierende Blende 7 weist dabei eine Blendenöffnung 7a auf, durch die vom Umgebungssensor ausgesendete Signale zum Erfassen eines Umfelds und/oder eines Szenarios im Umfeld der Anlage und/oder vom Emulator 1 in Reaktion auf die Signale erzeugte Antwort-Signale hindurch, insbesondere in den Emulator 1 hinein bzw. aus dem Emulator 1 heraus, treten können. Vorzugsweise wird die Blendenöffnung 7a dabei direkt vor dem Umgebungssensor positioniert.

Die Signal-absorbierende Blende 7 ist insbesondere als Ultraschall-absorbierende Schaumstoffblende ausgebildet und dazu eingerichtet, vom Umgebungssensor ausgesendete Signale, die nicht in den Emulator 1 hinein treten, weil sie beispielsweise unter einem unpassenden Winkel ausgesendet werden, zu absorbieren. Dadurch wird eine Vermeidung oder zumindest eine Verminderung der Reflexion solcher Signale, die sich dadurch störend mit den Antwort-Signalen überlagern könnten, am Emulator 1 ermöglicht.

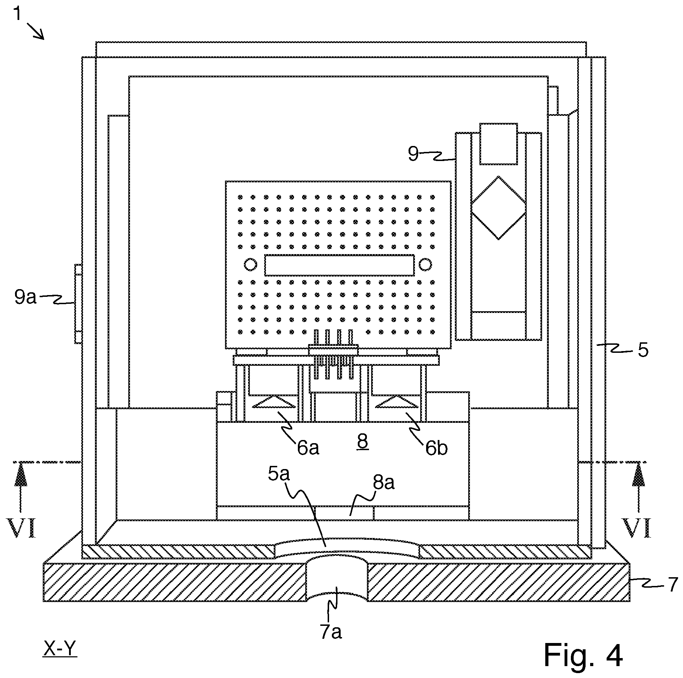

In den folgenden Figuren 4 bis 7 ist jeweils ein Schnitt durch den Emulator 1 in den durch das in Figur 3a) eingezeichnete Koordinatensystem definierten Ebenen X-Y, X-Z, Y-Z dargestellt. In Figur 3b) sind die entsprechende Schnittlinie IV-IV, die in der Ebene X-Y verläuft, und die entsprechende Schnittlinie V-V, die in der Ebene X-Z verläuft, in einer Frontalansicht, das heißt in der Ebene Z-Y, des Emulator 1 dargestellt.

**Figur 4** zeigt einen Schnitt durch den Emulator 1 entlang der Schnittlinie IV-IV in der Ebene X-Y gemäß Figur 3b). Der Emulator 1 weist ein Gehäuse 5 auf, in dem ein Empfänger 6a, ein Sender 6b, eine Signal-absorbierende Kammer 8 und eine Signalverarbeitungseinrichtung 9 angeordnet sind.

Der Empfänger 6a ist vorzugsweise dazu eingerichtet, ein von wenigstens einem Umgebungssensor einer Anlage, insbesondere von einem Ultraschallsensor eines Fahrzeugs (siehe Figur 2), ausgesendetes Signal, insbesondere Ultraschallsignal, zum Erfassen der Umgebung und/oder eines Szenarios im Umfeld der Anlage zu empfangen. Der Empfänger 6a kann etwa als Ultraschallempfänger ausgebildet und geeignet sein, in dem von dem mindestens einen Ultraschallsensor des Fahrzeugs verwendeten Frequenzbereich zu arbeiten.

Der Sender 6b ist vorzugsweise dazu eingerichtet, ein Antwort-Signal, welches ein simuliertes Umgebungsszenario charakterisiert, an den wenigstens einen Umgebungssensor zurückzusenden. Dabei kann der Sender 6b etwa als Ultraschallsender ausgebildet und geeignet sein, in dem von dem mindestens einen Ultraschallsensor des Fahrzeugs verwendeten Frequenzbereich zu arbeiten.

Das Antwort-Signal wird dabei vorzugsweise von der Signalverarbeitungseinrichtung 9 auf Grundlage des vom Empfänger 6a empfangenen Signals und des simulierten Umgebungsszenarios aus der Perspektive des Umgebungssensors erzeugt, beispielsweise indem das empfangene Signal moduliert und/oder zeitlich verzögert wird. Die Signalverarbeitungsrichtung 9 ist dazu beispielsweise als Mikrocontroller mit wenigstens einem Speicher, welcher ein Computerprogramm zur entsprechenden Signalverarbeitung enthält, ausgebildet.

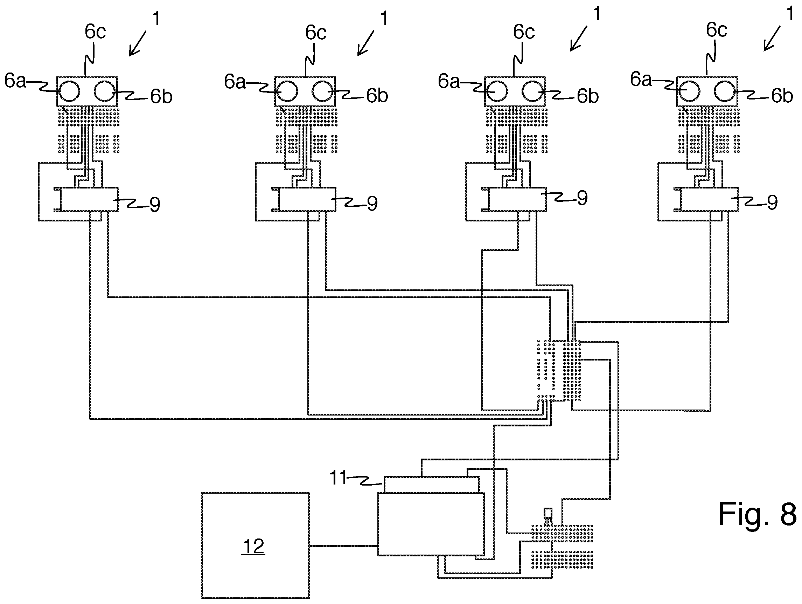

Das Erzeugen des Antwort-Signals wird von der Signalverarbeitungseinrichtung 9 insbesondere unter Berücksichtigung von Soll-Signalen und/oder Steuerparametern durchgeführt, die über eine Daten-Schnittstelle 9a empfangen werden können und von einer zentralen Steuerung (siehe Figur 8) generiert werden. Die Soll-Signale und/oder Steuerparameter erlauben dabei vorzugsweise eine Ansteuerung des Senders 6b durch die Signalverarbeitungseinrichtung 9 in einer Weise, in der ein Antwort-Signal erzeugt wird, das ein von dem wenigstens einen Umgebungssensor ausgesendetes Signal, welches mit Objekten des simulierten Umgebungsszenarios in Wechselwirkung getreten ist, emuliert. Auf diese Weise bildet das erzeugte Antwort-Signal das simulierte Umgebungsszenarios ab.

Empfänger 6a und Sender 6b sind in bevorzugter Weise innerhalb der Signal-absorbierenden Kammer 8 angeordnet, welche mit einem Signal-absorbierenden Material 8b ausgekleidet ist und einen absorbierenden Bereich bildet. Die Signal-absorbierende Kammer 8 ist insbesondere als Hohlraum ausgebildet, der den absorbierenden Bereich definiert. Dadurch kann zuverlässig vermieden werden, dass Signale, die von dem wenigstens einen Umgebungssensor ausgesendet werden, am Emulator 1, insbesondere zum wenigstens einen Umgebungssensor zurück, reflektiert werden und dadurch das Antwort-Signal störend überlagern.

Die Signal-absorbierende Kammer 8 weist eine Öffnung 8a auf, durch die hindurch das Signal und/oder das Antwort-Signal gesendet werden kann. Die Öffnung 8a ist dabei konzentrisch mit einer Gehäuseöffnung 5a und vorteilhaft auf einer Seite der Signal-absorbierenden Kammer 8 angeordnet, die dem Empfänger 6a und dem Sender 6b gegenüberliegt, so dass sich das Signal und/oder das Antwort-Signal im Wesentlichen geradlinig und ungestört zwischen dem vor dem Emulator 1, insbesondere vor der Signal-absorbierenden Kammer 8, angeordneten wenigstens einen Umgebungssensor und dem Empfänger 6a bzw. Sender 6b ausbreiten bzw. fortpflanzen kann.

Das Gehäuse 5 ist auf einer an die Signal-absorbierende Kammer 8 angrenzenden Außenseite, auf der auch Gehäuseöffnung 5a angeordnet ist, mit einer Signal-absorbierenden Blende 7, insbesondere einer ultraschallabsorbierenden Schaumstoffblende, abgedeckt. Die Blende 9 weist ebenfalls eine Blendenöffnung 7a, die sowohl mit der Öffnung 8a als auch mit der Gehäuseöffnung 5a konzentrisch angeordnet ist, auf.

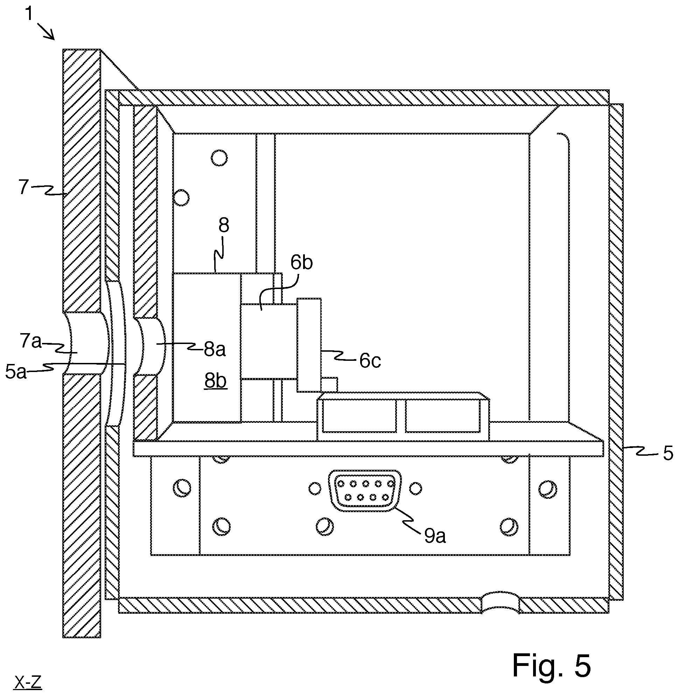

**Figur** 5 zeigt einen Schnitt durch den Emulator 1 entlang der Schnittlinie V-V in der Ebene X-Z gemäß Figur 3b). Der Sender 6b, der gegenüberliegend von zueinander konzentrischen Öffnungen 8a, 5a, 7a der Signal-absorbierenden Kammer 8, des Gehäuses 5 des Emulators 1 bzw. der Signal-absorbierenden Blende 7 angeordnet ist, kann dabei mittels der Signalverarbeitungseinrichtung (siehe Figur 4) über eine Transceiver-Platine 6c angesteuert werden. Vorzugsweise ist der Empfänger (siehe Figur 4) ebenfalls von der Signalverarbeitungseinrichtung über die Transceiver-Platine 6c steuerbar.

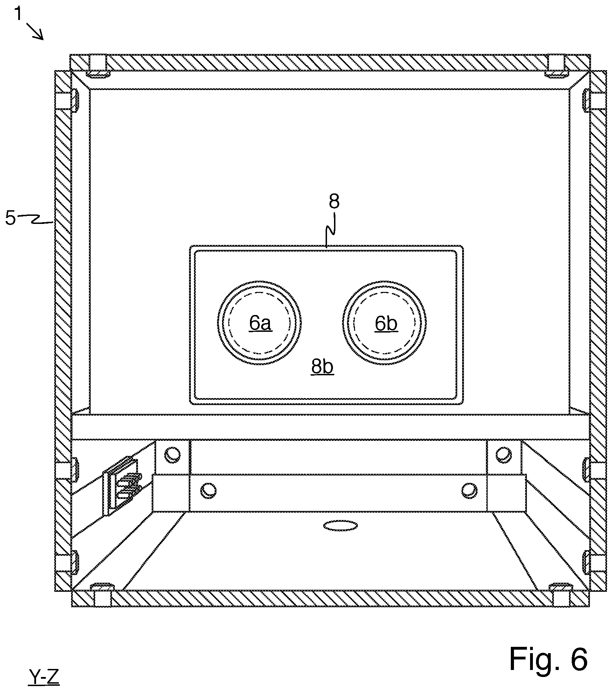

**Figur 6** zeigt einen Schnitt durch den Emulator 1 entlang der Schnittlinie VI-VI in der Ebene Y-Z gemäß Figur 4. Die Signal-absorbierende Kammer 8 ist mit dem Signal-absorbierenden Material 8b bis auf zwei von dem Empfänger 6a und dem Sender 6b eingenommene Flächen vollständig ausgekleidet.

Empfänger 6a und Sender 6b sind vorzugsweise in Aussparungen oder Vertiefungen der Signal-absorbierenden Kammer 8 angeordnet, um die herum das Signal-absorbierende Material 8b angeordnet ist. Dadurch kann die Oberfläche des Empfängers 6a bzw. des Senders 6b, die dem vom wenigstens einen Umgebungssensor ausgesendeten Signal oder dem vom Sender 6a ausgesendeten Antwort-Signal ausgesetzt ist und das Signal bzw. das Antwort-Signal ungewollt reflektieren würde, minimiert werden.

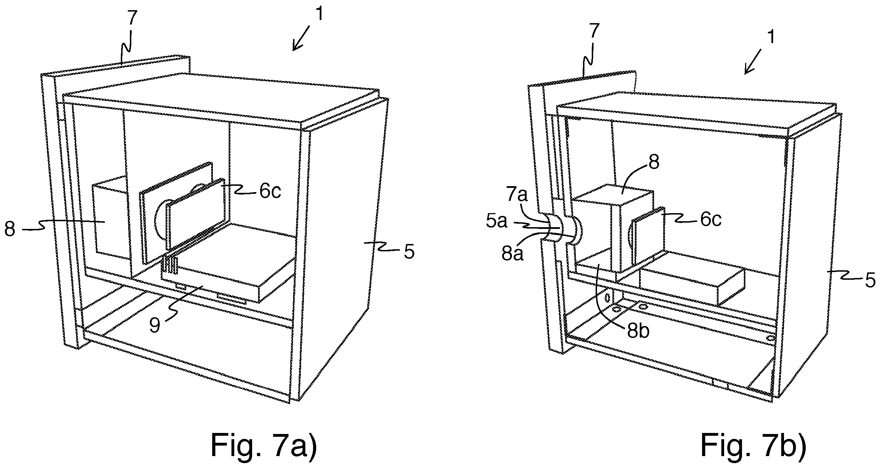

**Figur 7** zeigt einen Schnitt durch den Emulator 1 in der Ebene X-Z gemäß Figur 3 in einer dreidimensionalen Darstellung. In **Figur 7a** verläuft der Schnitt dabei an der Signal-absorbierenden Kammer 8 vorbei, so dass die Signalverarbeitungseinrichtung 9 und die Transceiver-Platine 6c sichtbar sind. In **Figur 7b** verläuft der Schnitt entlang der Schnittlinie V-V gemäß Figur 3b), das heißt zentral durch den Emulator 1, so dass das Signal-absorbierende Material 8b auf der Innenseite der Signal-absorbierenden Kammer 8 und die zueinander konzentrischen Öffnungen 5a, 7a, 8a des Gehäuses 5, der Signal-absorbierenden Blende 7 und der Signal-absorbierenden Kammer 8 sichtbar sind.

**Figur 8** zeigt ein bevorzugtes Ausführungsbeispiel eines Systems 10 zum Analysieren eines Automatisierungssystems einer Anlage, insbesondere eines Fahrerassistenzsystems eines Fahrzeugs, mit einer Mehrzahl von Emulatoren 1 zum zumindest teilweise virtuellen Betreiben des Automatisierungssystems der Anlage.

Jeder der Emulatoren aus der Mehrzahl von Emulatoren 1, von denen im gezeigten Beispiel vier vorgesehen sind, weist einen Empfänger 6a und einen Sender 6b auf, welche vorzugsweise auf einer Transceiver-Platine 6c montiert sind. Mittels der Transceiver-Platine 6c können der Empfänger 6a und der Sender 6b jeweils von einer Signalverarbeitungseinrichtung 9 angesteuert werden.

Jede der Signalverarbeitungseinrichtungen 9 ist vorzugsweise dazu eingerichtet, anhand von Soll-Signalen und/oder Steuerparametern Antwort-Signale zu erzeugen, die von jeweiligen Sender 6b an einen an bzw. vor dem jeweiligen Emulator 1 angeordneten Umgebungssensor der Anlage gesendet werden und ein simuliertes Umgebungsszenario charakterisieren. In bevorzugter weise basieren die erzeugten Antwort-Signale auf zuvor von dem jeweiligen Empfänger 6a empfangenen Signalen, die vom jeweiligen Umgebungssensor ausgesendet werden.

Die Signalverarbeitungseinrichtungen 9 sind insbesondere als Mikrocontroller ausgebildet und dazu eingerichtet, die empfangenen Signale gemäß der Soll-Signale und/oder der Steuerparametern zu modulieren und/oder zeitlich zu verzögern und die Sender 6b zu veranlassen, die derart verarbeiteten Signale als Antwort-Signale an wenigstens einen Umgebungssensor der Anlage auszugeben. Dadurch können dem Automatisierungssystem der Anlage Informationen bezüglich des simulierten Umgebungsszenarios zur Verfügung gestellt werden.

Die Soll-Signale und/oder Steuerparameter werden von einer zentralen Steuerung 11 an den Signalverarbeitungseinrichtungen 9 bereitgestellt. Die zentrale Steuerung 11, welche insbesondere als Mikrocontroller ausgebildet ist, ist mit den Signalverarbeitungseinrichtungen 9 vorzugsweise über einen Daten-Bus, insbesondere über einen I²C-Bus verbunden.

Die zentrale Steuerung 11 ist auch mit einem Simulationsmittel 12 zur Simulation des Umgebungsszenarios, etwa einer Recheneinrichtung, auf welcher entsprechende Software zur Simulation des Umgebungsszenarios betrieben werden kann, verbunden, beispielsweise durch eine Netzwerkverbindung. Ein vom Simulationsmittel 12 dabei erzeugter Datenstrom, welcher das simulierte Umgebungsszenario charakterisiert, kann insbesondere per UDP-Protokoll an die zentrale Steuerung 11 übertragen werden. Die zentrale Steuerung 11 ist vorzugsweise dazu eingerichtet, anhand des empfangenen Datenstroms zu ermitteln, welche Antwort-Signale von den Sendern 6b der verschiedenen Emulatoren 1 an einen oder mehrere Umgebungssensoren der Anlage ausgesendet werden müssen, um das simulierte Umgebungsszenario für den Umgebungssensor bzw. das mit dem Umgebungssensor verbundene Automatisierungssystem korrekt darzustellen. Die zentrale Steuerung 11 erzeugt die entsprechenden Soll-Signale und/oder Steuerparametern und stellt diese an den jeweiligen Signalverarbeitungseinrichtung 9 der Emulatoren 1 bereit. Die zentrale Steuerung 11 ist insbesondere dazu eingerichtet, das Aussenden der Antwort-Signale durch die verschiedenen Sender 6b der Emulatoren 1 zu koordinieren und damit eine aus der Perspektive eines jeden Umgebungssensors korrekte Darstellung des simulierten Umgebungsszenarios zu ermöglichen.

### Bezugszeichenliste

- 1: Emulator
- 2: Fahrerassistenzsystem
- 3: Fahrzeug
- 4: Umgebungssensor
- 5: Gehäuse
- 5a: Gehäuseöffnung
- 6a: Empfänger
- 6b: Sender
- 6c: Transceiver-Platine
- 7: Signal-absorbierende Blende
- 7a: Blendenöffnung
- 8: Signal-absorbierende Kammer
- 8a: Öffnung
- 8b: Signal-absorbierendes Material
- 9: Signalverarbeitungseinrichtung
- 9a: Daten-Schnittstelle (9a)
- 10: System
- 11: zentrale Steuerung
- 100: Verfahren
- 110: Prüfstand
- 111: Radstimulationseinrichtung
- 112: Temperierungseinrichtung
- 113: Fahrtwindemulationseinrichtung

- S1 - S5: Verfahrensschritte

## Patentansprüche

1. Verfahren (100) zur Analyse eines Automatisierungssystems einer Anlage, insbesondere eines Fahrerassistenzsystems (2) eines Fahrzeugs (3), welches Umgebungssensoren (4) aufweist, folgende Arbeitsschritte aufweisend:
• Simulieren (S1) eines Umgebungsszenarios für die Anlage, insbesondere eines Verkehrsszenarios;
• Ableiten (S3) eines durch wenigstens einen Umgebungssensor (4) zu erfassenden Antwort-Signals, insbesondere eines Ultraschall-Antwortsignals, auf der Grundlage des Umgebungsszenarios aus der Perspektive des wenigstens einen Umgebungssensors (4);
• Ausgeben (S4) des Antwort-Signals an den wenigstens einen Umgebungssensor (4) mittels eines Emulators (1), wobei der wenigstens eine Umgebungssensor (4) auf der Grundlage des ausgegebenen Antwort-Signals Sensordaten erzeugt;
• Betreiben (S5) des Automatisierungssystems und/oder der Anlage mittels der erzeugten Sensordaten und vorzugsweise weiterer Sensordaten realer und/oder simulierter Sensoren; und **dadurch gekennzeichnet, dass** das
Verfahren weiter den folgenden Arbeitsschritt aufweist:
• Simulieren (S2) des wenigstens einen Umgebungssensors mittels eines Sensormodells,
wobei der wenigstens eine simulierte Umgebungssensor das simulierte Umgebungsszenario virtuell erfasst und das Antwort-Signal auf der Grundlage des virtuell erfassten simulierten Umgebungsszenarios erzeugt wird.

2. Verfahren (100) nach Anspruch 1, wobei ein Signal, insbesondere dessen Ausbreitung und Intensität, zum virtuellen Erfassen des simulierten Umgebungsszenarios sowie das Antwort-Signal auf der Grundlage von physikalischen Modellen durch das Sensormodell simuliert werden.

3. Verfahren (100) nach einem der Ansprüche 1 oder 2, wobei das Automatisierungssystem und/oder die Anlage auf einem Prüfstand (110) oder im Feld mittels des simulierten Umgebungsszenarios betrieben werden.

4. Verfahren (100) nach einem der Ansprüche 1 bis 3, wobei der Emulator (1) beim Ausgeben des Antwort-Signals ein empfangenes Signal, welches von dem wenigstens einen Umgebungssensor (4) ausgesandt wurde, berücksichtigt.

5. Emulator (1) zur Verwendung in einem Verfahren (100) nach einem der Ansprüche 1 bis 4, eingerichtet zum wenigstens teilweise virtuellen Betreiben eines Automatisierungssystems einer Anlage, insbesondere eines Fahrerassistenzsystems (2) eines Fahrzeugs (3), welches Umgebungssensoren (4) aufweist, aufweisend:
• einen Empfänger (6a), eingerichtet zum Empfangen von Signalen, welche von einem Umgebungssensor (4) ausgesandt werden;
• einen Sender (6b), eingerichtet zum Aussenden von Antwort-Signalen auf empfangene Signale;
• einen absorbierenden Bereich, eingerichtet zum Absorbieren von Signalen;
• eine Signalverarbeitungseinrichtung (9), welche eingerichtet ist, auf der Grundlage der empfangenen Signale Antwort-Signale zu erzeugen; und
• eine Daten-Schnittstelle (9a) zum Empfang von Soll-Signalen und/oder Steuerparametern, insbesondere in Echtzeit, von einer zentralen Steuerung (11),
wobei der Empfänger (6a) und der Sender (6b) in einer Signal-absorbierenden Kammer (8) angeordnet sind.

6. Emulator (1) nach Anspruch 5, wobei die Signal-absorbierende Kammer (8) eine Öffnung (8a) aufweist, durch welche die Signale in den Emulator (1) eintreten können und/oder in/vor welcher ein Umgebungssensor (4) angeordnet werden kann.

7. System (10) zur Analyse eines Automatisierungssystems einer Anlage, insbesondere eines Fahrerassistenzsystems (2) eines Fahrzeugs (3), welches Umgebungssensoren (4) aufweist, aufweisend:
• Simulationsmittel zum Simulieren eines Umgebungsszenarios für die Anlage; und
• wenigstens einen Emulator (1), insbesondere einen Ultraschallemulator, nach einem der Ansprüche 5 oder 6, welcher eingerichtet ist, ein Signal an die Umgebungssensoren (4) auf der Grundlage des Umgebungsszenarios aus der Perspektive der Umgebungssensoren (4) auszugeben.

8. System (10) nach Anspruch 7, des Weiteren aufweisend:
• eine zentrale Steuerung (11);
wobei die zentrale Steuerung (11) und der wenigstens eine Emulator (1) eingerichtet sind, um miteinander zu kommunizieren und wobei die zentrale Steuerung (11) eingerichtet ist, ein Ausgeben von Antwort-Signalen an einer Mehrzahl von Emulatoren (1) auf der Grundlage des Umgebungsszenarios zu steuern.

9. System (10) nach Anspruch 8, wobei die zentrale Steuerung (11) Frequenz, Amplitude und Antwort-Totzeit für jeden der Mehrzahl an Emulatoren (1) definiert.

## Claims

1. Method (100) for analyzing an automation system of a mechanism, in particular a driver assistance system (2) of a vehicle (3) which has environment sensors (4), comprising the following operating steps:
• Simulating (S1) an environmental scenario for the mechanism, in particular a traffic scenario;
• Deriving (S3) a response signal to be detected by at least one environment sensor (4), in particular an ultrasonic response signal, based on the environment scenario from the perspective of the at least one environment sensor (4);
• Outputting (S4) the response signal to the at least one environment sensor (4) by means of an emulator (1), wherein the at least one environment sensor (4) generates sensor data based on the output response signal;
• Operating (S5) the automation system and/or the mechanism by means of the generated sensor data and preferably further sensor data of real and/or simulated sensors; and
**characterized in that** the method further has following operating step:
• Simulating (S2) the at least one environmental sensor using a sensor model,
wherein the at least one simulated environment sensor virtually senses the simulated environment scenario, and the response signal is generated based on the virtually sensed simulated environment scenario.

2. The method (100) according to claim 1, wherein a signal, in particular its propagation and intensity, for virtual detection of the simulated environmental scenario and the response signal are simulated based on physical models by the sensor model.

3. The method (100) of any one of claims 1 or 2, wherein the automation system and/or the equipment are operated on a test bench (110) or in the field using the simulated environmental scenario.

4. The method (100) according to any one of claims 1 to 3, wherein the emulator (1) takes into account a received signal emitted by the at least one environmental sensor (4) when outputting the response signal.

5. Emulator (1) for use in a method (100) according to any one of claims 1 to 4, set up for at least partial virtual operation of an automation system of a mechanism, in particular a driver assistance system (2) of a vehicle (3), which has environment sensors (4):
• a receiver (6a) arranged to receive signals emitted by an environmental sensor (4);
• a transmitter (6b) arranged to transmit response signals to received signals;
• an absorbing area, set up to absorb signals;
• signal processing means (9) adapted to generate response signals based on the received signals; and
• a data interface (9a) for receiving setpoint signals and/or control parameters, in particular in real time, from a central controller (11),
wherein the receiver (6a) and the transmitter (6b) are arranged in a signal-absorbing chamber (8).

6. Emulator (1) according to claim 5, wherein the signal-absorbing chamber (8) comprises an opening (8a) through which the signals can enter the emulator (1) and/or in/before which an environmental sensor (4) can be arranged.

7. System (10) for analyzing an automation system of a mechanism, in particular a driver assistance system (2) of a vehicle (3), comprising environment sensors (4):
• Simulation means for simulating an environmental scenario for the facility; and
• at least one emulator (1), in particular an ultrasonic emulator, according to one of claims 5 or 6, which is arranged to output a signal to the environmental sensors (4) based on the environmental scenario from the perspective of the environmental sensors (4).

8. The system (10) of claim 7, further comprising:
• a central controller (11);
wherein the central controller (11) and the at least one emulator (1) are arranged to communicate with each other, and wherein the central controller (11) is arranged to control an output of response signals to a plurality of emulators (1) based on the environmental scenario.

9. The system (10) of claim 8, wherein the central controller (11) defines frequency, amplitude, and response dead time for each of the plurality of emulators (1).

## Revendications

1. Procédé (100) d'analyse d'un système d'automatisation d'une installation, en particulier d'un système d'assistance au conducteur (2) d'un véhicule (3), lequel présente des capteurs d'environnement (4), présentant des étapes de travail suivantes :
- la simulation (E1) d'un scénario d'environnement pour l'installation, en particulier d'un scénario de circulation ;
- la déduction (E3) d'un signal de réponse à détecter par au moins un capteur d'environnement (4), en particulier d'un signal de réponse ultrasonore, sur la base du scénario d'environnement depuis la perspective de l'au moins un capteur d'environnement (4) ;
- l'envoi (E4) du signal de réponse à l'au moins un capteur d'environnement (4) au moyen d'un émulateur (1), dans lequel l'au moins un capteur d'environnement (4) génère des données de capteur sur la base du signal de réponse envoyé ;
- le fonctionnement (E5) du système d'automatisation et/ou de l'installation au moyen des données de capteur générées et de préférence d'autres données de capteur de capteurs réels et/ou simulés ; et **caractérisé en ce que** le procédé présente par ailleurs l'étape de procédé suivante :
- la simulation (E2) de l'au moins un capteur d'environnement au moyen d'un modèle de capteur,
dans lequel l'au moins un capteur d'environnement simulé détecte virtuellement le scénario d'environnement simulé et le signal de réponse est généré sur la base du scénario d'environnement simulé détecté virtuellement.

2. Procédé (100) selon la revendication 1, dans lequel un signal, en particulier sa préparation et son intensité, est simulé pour détecter virtuellement le scénario d'environnement simulé et le signal de réponse est simulé par le modèle de capteur sur la base de modèles physiques.

3. Procédé (100) selon l'une quelconque des revendications 1 ou 2, dans lequel le système d'automatisation et/ou l'installation fonctionnent sur un banc d'essai (110) ou sur le terrain au moyen du scénario d'environnement simulé.

4. Procédé (100) selon l'une quelconque des revendications 1 à 3, dans lequel l'émulateur (1) tient compte, lors de l'envoi du signal de réponse, d'un signal reçu, lequel a été envoyé par l'au moins un capteur d'environnement (4).

5. Emulateur (1) destiné à être utilisé dans un procédé (100) selon l'une quelconque des revendications 1 à 4, mis au point pour faire fonctionner au moins en partie virtuellement un système d'automatisation d'une installation, en particulier d'un système d'assistance au conducteur (2) d'un véhicule (3), lequel présente des capteurs d'environnement (4), présentant :
- un récepteur (6a) mis au point pour recevoir des signaux, lesquels sont envoyés par un capteur d'environnement (4) ;
- un émetteur (6b) mis au point pour émettre des signaux de réponse à des signaux reçus ;
- une zone d'absorption mise au point pour absorber des signaux ;
- un dispositif de traitement de signaux (9), lequel est mis au point pour générer des signaux de réponse sur la base des signaux reçus ; et
- une interface de données (9a) pour recevoir des signaux théoriques et/ou des paramètres de commande, en particulier en temps réel, depuis une commande centrale (11),
dans lequel le récepteur (6a) et l'émetteur (6b) sont disposés dans une chambre (8) d'absorption de signaux.

6. Emulateur (1) selon la revendication 5, dans lequel la chambre (8) d'absorption de signaux présente une ouverture (8a), par laquelle les signaux peuvent entrer dans l'émulateur (1) et/ou dans/devant laquelle un capteur d'environnement (4) peut être disposé.

7. Système (10) pour l'analyse d'un système d'automatisation d'une installation, en particulier d'un système d'assistance au conducteur (2) d'un véhicule (3), lequel présente des capteurs d'environnement (4), présentant :
- des moyens de simulation pour simuler un scénario d'environnement pour l'installation ; et
- au moins un émulateur (1), en particulier un émulateur ultrasonore, selon l'une quelconque des revendications 5 ou 6, mis au point pour envoyer un signal aux capteurs d'environnement (4) sur la base du scénario d'environnement depuis la perspective des capteurs d'environnement (4).

8. Système (10) selon la revendication 7, présentant par ailleurs :
- une commande centrale (11) ;
dans lequel la commande centrale (11) et l'au moins un émulateur (1) sont mis au point pour communiquer l'un avec l'autre, et dans lequel la commande centrale (11) est mise au point pour commander un envoi de signaux de réponse à une multitude d'émulateurs (1) sur la base du scénario d'environnement.

9. Système (10) selon la revendication 8, dans lequel la commande centrale (11) définit la fréquence, l'amplitude, le temps mort de réponse pour chaque émulateur de la multitude d'émulateurs (1).
